# EUROPÄISCHE PATENTSCHRIFT

(11) **EP 2 280 197 B1**
(45) Veröffentlichungstag und Bekanntmachung des Hinweises auf die Patenterteilung: **21.10.2015**
(21) Anmeldenummer: 10006381.7
(22) Anmeldetag: 19.06.2010
(51) Int. Cl.: F16H 61/4052, F16H 61/444, B60K 23/08, F16H 61/4139

(54) **Hydrostatischer Mehrmotorenantrieb**
Hydrostatic multiple motor drive
Entraînement hydrostatique de plusieurs moteurs

(30) Priorität: 30.07.2009 DE 102009035281
(43) Veröffentlichungstag der Anmeldung: 02.02.2011
(73) Patentinhaber: Robert Bosch GmbH, 70442 Stuttgart (DE)
(72) Erfinder: Essig, Heinz-Gerhard, 89173 Lonsee (DE); Loewe, Peter, 88483 Rot (DE)
(74) Vertreter: Thürer, Andreas

(56) Entgegenhaltungen:
- EP-A2- 1 837 226
- EP-A2- 2 014 958
- WO-A1-2008/071420
- FR-A1- 2 911 658
- US-A- 3 788 075
- US-B1- 6 508 328

## Beschreibung

Die Erfindung betrifft einen hydrostatischen Mehrmotorenantrieb.

In der WO 2008/071420 A1 ist ein hydrostatischer Mehrmotorenantrieb mit einer Hydropumpe und einem Hydromotorpaar gezeigt. Die beiden Hydromotoren des Hydromotorpaars sind über einen Arbeitsleitungsabschnitt seriell miteinander verbunden. Der Arbeitsleitungsabschnitt ist mit einer Umgehungsleitung verbunden, die einen in Bezug auf eine erste Förderrichtung der Hydropumpe stromaufwärtigen Anschluss des stromabwärtigen Hydromotors mit einem stromabwärtigen Anschluss des stromabwärtigen Hydromotors verbindet. In der Umgehungsleitung ist ein federbelastetes Rückschlagventil zum Aufrechterhalten eines Mindestdrucks an dem stromaufwärtigen Anschluss des stromabwärtigen Hydromotors angeordnet. Mittels der Umgehungsleitung kann einer der beiden Hydromotoren des Hydromotorpaars entlastet werden, so dass der jeweils andere Hydromotor die Hauptlast trägt. Welcher der beiden Hydromotoren des Hydromotorpaars entlastet wird, hängt von der Förderrichtung der Hydropumpe ab, da der Aufbau symmetrisch ist. Es gibt somit keinen von der Förderrichtung der Hydropumpe unabhängigen Hauptantrieb. Der Hauptantrieb variiert daher mit der Förderrichtung der Hydropumpe. Maschinen, welche einen von der Förderrichtung der Hydropumpe unabhängigen, d.h. einen fixen, Hauptantrieb benötigen, können so nicht optimal betrieben werden. Dies ist z.B. bei Rasentraktoren der Fall, die eine wesentlich höhere Belastung der Vorderachse aufweisen.

Es ist daher die Aufgabe der Erfindung, einen hydrostatischen Mehrmotorenantrieb zu schaffen, mit dem Maschinen mit einem förderrichtungsunabhängigen Hauptantrieb betrieben werden können.

Die Aufgabe wird durch den hydrostatischen Mehrmotorenantrieb gemäß Anspruch 1 gelöst.

Der erfindungsgemäße hydrostatische Mehrmotorenantrieb umfasst eine Hydropumpe und zumindest ein erstes Hydromotorpaar. Die beiden Hydromotoren des ersten Hydromotorpaars sind über einen Arbeitsleitungsabschnitt seriell miteinander verbunden. Es ist eine Umgehungsleitung vorgesehen, die einen in Bezug auf eine erste Förderrichtung der Hydropumpe stromaufwärtigen Anschluss des stromabwärtigen Hydromotors des ersten Hydromotorpaars mit einem stromabwärtigen Anschluss des stromabwärtigen Hydromotors des ersten Hydromotorpaars verbindet. In der Umgehungsleitung ist ein erstes federbelastetes Rückschlagventil zum Aufrechterhalten eines Mindestdrucks an dem in Bezug auf die erste Förderrichtung der Hydropumpe stromaufwärtigen Anschluss des stromabwärtigen Hydromotors und ein elektrisch gesteuertes Schaltventil, welches in eine die Umgehungsleitung sperrende und in eine die Umgehungsleitung öffnende Position bringbar ist, angeordnet. Zudem ist in der Umgehungsleitung ein zweites federbelastetes Rückschlagventil parallel, aber mit entgegengesetzter Öffnungsrichtung zum ersten federbelasteten Rückschlagventil angeordnet.

Durch das erste federbelastete Rückschlagventil und das zweite federbelastete Rückschlagventil wird sichergestellt, dass der in Bezug auf die erste Förderrichtung der Hydropumpe stromaufwärtige Hydromotor unabhängig von der Förderrichtung der Hydropumpe immer als Hauptantrieb verwendet werden kann.

Durch das Schaltventil kann die Umgehungsleitung geöffnet und geschlossen werden. Auf diese Weise kann wunschgemäß sichergestellt bzw. unterbunden werden, dass der Hauptantrieb als solcher verwendet wird. So wird in der geöffneten Schaltstellung die Funktion der Umgehungsleitung stillgelegt. Der Druckmittelvolumenstrom muss dann durch beide Hydromotoren gefördert werden. Es entsteht eine Sperrwirkung. Die geöffnete Position ist dabei vorzugsweise die Neutralposition des Schaltventils.

In den Unteransprüchen sind vorteilhafte Weiterbildungen des erfindungsgemäßen hydrostatischen Mehrmotorenantriebs ausgeführt.

Vorzugsweise ist das Schaltventil zwischen dem Arbeitsleitungsabschnitt und den federbelasteten Rückschlagventilen angeordnet.

Vorzugsweise ist die Umgehungsleitung zwischen dem Schaltventil und dem Arbeitsleitungsabschnitt mit einer Speiseventileinheit verbunden. Mittels der Speiseventileinheit kann aus der Umgehungsleitung je nach Bedarf Druckmittel abgeführt werden oder Druckmittel zugeführt werden. Einerseits werden so ein unzulässiger Druckanstieg und der Stillstand des Fahrzeugs im Falle des Blockierens z.B. des stromabwärtigen Hydromotors in gesperrtem Betrieb vermieden. Andererseits kann Leckage ausgeglichen werden.

Vorzugsweise umfasst die Speiseventileinheit ein Rückschlagventil und ein Differenzdruckregelventil. Über das Rückschlagventil kann die Umgehungsleitung den Druckmittelzufluss erhalten. Über das Differenzdruckregelventil kann die Umgehungsleitung den Druckmittel bei Überdruck abgeben.

Vorzugsweise ist die Speiseventileinheit mittels des weiteren Rückschlagventils mit einer Speiseeinrichtung verbunden. Von der Speiseeinrichtung kann die Umgehungsleitung einen Druckmittelzufluss über die Speiseventileinheit erhalten.

Vorzugsweise ist die Speiseventileinheit mittels des Differenzdruckregelventils über ein erstes Speiserückschlagventil mit einer ersten Arbeitsleitung und über ein zweites Speiserückschlagventil mit einer zweiten Arbeitsleitung verbunden. Über das Differenzdruckregelventil kann die Umgehungsleitung Druckmittel in die erste bzw. die zweite Arbeitsleitung abgeben.

Vorzugsweise weisen das erste federbelastete Rückschlagventil und das zweite federbelastete Rückschlagventil jeweils einen höheren Öffnungsdruck als das erste Speiserückschlagventil und einen höheren Öffnungsdruck als das zweite Speiserückschlagventil auf. Auf diese Weise ist sichergestellt, dass die Umgehungsleitung Druckmittel an die erste bzw. die zweite Arbeitsleitung abgeben kann, während dennoch ein Mindestdruck in der Umgehungsleitung und dem Arbeitsleitungsabschnitt aufrecht erhalten wird.

Vorzugsweise weisen das erste federbelastete Rückschlagventil und das zweite federbelastete Rückschlagventil denselben ersten Öffnungsdruck (vorzugsweise z.B. ca. 14 bar) auf. Vorzugsweise weisen das erste Speiserückschlagventil und das zweite Speiserückschlagventil denselben zweiten, niedrigeren Öffnungsdruck auf (vorzugsweise z.B. ca. 5 bar). Durch die jeweils selben Öffnungsdrücke der federbelasteten Rückschlagventile bzw. der Speiserückschlagventile ist das System mit einfachen Mitteln, d.h. z.B. durch baugleiche Teile für gleiche Öffnungsdrücke, realisierbar. Außerdem wird so die Priorisierung eines Hydromotors fahrtrichtungsunabhängig erreicht.

Vorzugsweise ist bei mehreren Hydromotorpaaren der jeweils in Bezug auf die erste Förderrichtung der Hydropumpe stromaufwärtige Hydromotor der Hydromotorpaare mit derselben Fahrzeugachse verbunden. So kann z.B. im Falle eines Rasentraktors mit vier Radmotoren die Vorderachse durch die beiden jeweils in Bezug auf die erste Förderrichtung der Hydropumpe stromaufwärtigen Hydromotoren der parallel angeordneten Hydromotorpaare angetrieben werden.

In dem Fall, dass der hydrostatische Mehrmotorenantrieb zumindest ein zweites Hydromotorpaar entsprechend den bisherigen Ausführungen aufweist, kann jedes Hydromotorpaar eine unabhängige Umgehungsleitung entsprechend den bisherigen Ausführungen oder aber eine mit zumindest einem anderen Hydromotorpaar geteilte gemeinsame Umgehungsleitung entsprechend den bisherigen Ausführungen aufweisen.

Eine bevorzugte Ausführungsform der Erfindung wird anhand der Zeichnung in der nachfolgenden Beschreibung näher erläutert. Es zeigen:
- Fig. 1: ein erstes Ausführungsbeispiel eines erfindungsgemäßen hydrostatischen Mehrmotorenantriebs; und
- Fig. 2: ein zweites Ausführungsbeispiel eines erfindungsgemäßen hydrostatischen Mehrmotorenantriebs mit einer geänderten Speiseventileinheit.

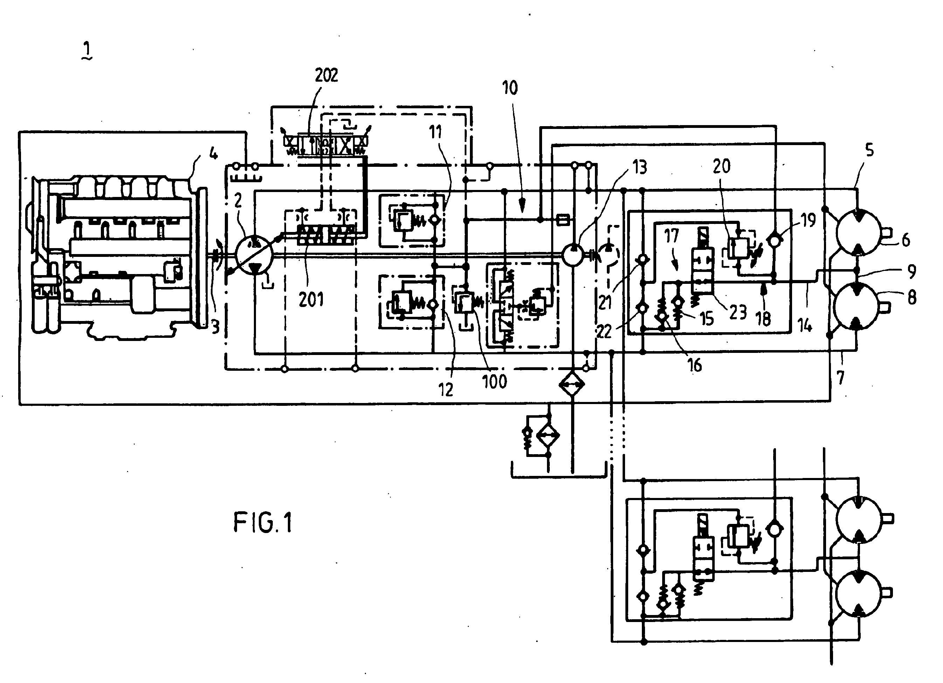

Fig. 1 zeigt einen hydraulischen Schaltplan eines erfindungsgemäßen hydrostatischen Mehrmotorenantriebs 1. Der hydrostatische Mehrmotorenantrieb 1 umfasst eine verstellbare Hydropumpe 2, welche über eine Triebwelle 3 durch einen Antriebsmotor 4 angetrieben wird. Der Antriebsmotor 4 ist in dem dargestellten Ausführungsbeispiel als Brennkraftmaschine ausgeführt. Das Hubvolumen der verstellbaren und für zwei Förderrichtungen ausgelegten Hydropumpe 2 wird durch eine Steuervorrichtung 201 eingestellt, welche von einer Steuerventileinheit 202 gesteuert wird.

Die Hydropumpe 2 ist über eine erste Arbeitsleitung 5 mit einem ersten Hydromotor 6 und über eine zweite Arbeitsleitung 7 mit einem zweiten Hydromotor 8 verbunden. Der erste Hydromotor 6 und der zweite Hydromotor 8 sind über einen Arbeitsleitungsabschnitt 9 seriell miteinander verbunden und bilden gemeinsam ein erstes Hydromotorpaar. Für die nachfolgenden Erläuterungen gilt, dass die erste Förderrichtung der Hydropumpe 2 einer Förderung in die erste Arbeitsleitung 5 entspricht. Der erste, dann stromaufwärtige Hydromotor 6 wird dann bei nicht gesperrtem Antrieb priorisiert.

Die erste Arbeitsleitung 5 und die zweite Arbeitsleitung 7 sind jeweils mit einer Speiseeinrichtung 10 verbunden. Die erste Arbeitsleitung 5 ist über eine erste Speiseventileinheit 11 und die zweite Arbeitsleitung 7 über eine zweite Speiseventileinheit 12 mit der Speiseeinrichtung 10 verbunden. Die erste Arbeitsleitung 5 und die zweite Arbeitsleitung 7 können mittels der Speiseeinrichtung 10 Druckmittelzuflüsse erhalten oder Druckmittel bei unzulässigen Druckanstiegen an die Speiseeinrichtung 10 abgeben. Die Speiseeinrichtung 10 gibt oberhalb eines maximalen Speisedrucks über ein Speisedruckbegrenzungsventil 100 Druckmittel in einen Druckmitteltank ab. Zum Nachspeisen von Druckmittel für den Leckageausgleich ist eine Speisepumpe 13 vorgesehen.

Der Arbeitsleitungsabschnitt 9 zwischen den Hydromotoren 6, 8 ist über eine Umgehungsleitung 14 mit der zweiten Arbeitsleitung 7 verbunden. In der Umgehungsleitung 14 ist eine erste Mindestdruckhalteeinrichtung in Form eines ersten federbelasteten Rückschlagventils 15 zum Aufrechterhalten eines Mindestdrucks in dem Arbeitsleitungsabschnitt 9 bei der ersten Förderrichtung der Hydropumpe 2 angeordnet. In der Umgehungsleitung 14 ist ferner eine zweite Mindestdruckhalteeinrichtung in Form eines zweiten federbelasteten Rückschlagventils 16 angeordnet, welche parallel, aber mit entgegengesetzter Öffnungsrichtung zum ersten federbelasteten Rückschlageventil 15 angeordnet ist. Bei der entgegengesetzten Förderrichtung zur ersten Förderrichtung wird durch das zweite federbelastete Rückschlagventil der Druckabfall über den dann stromaufwärtigen zweiten Hydromotor 8 eingestellt. Das erste federbelastete Rückschlageventil 15 und das zweite federbelastete Rückschlageventil 16 bilden gemeinsam eine Mindestdruckhaltevorrichtung 17.

Zwischen der Mindestdruckhaltevorrichtung 17 und dem Arbeitsleitungsabschnitt 9 ist die Umgehungsleitung 14 mit einer weiteren Speiseventileinheit 18 verbunden. Die weitere Speiseventileinheit 18 umfasst ein weiteres Rückschlagventil 19, welches in Richtung auf die Umgehungsleitung 14 hin öffnet und ebenfalls eine Feder aufweist, welche das weitere Rückschlagventil 19 in Schließrichtung vorspannt, und ein Differenzdruckregelventil 20. Die weitere Speiseventileinheit 18 ist mittels des Rückschlagventils 19 mit der Speiseeinrichtung 10 verbunden.

Das Differenzdruckregelventil 20 verbindet die Umgehungsleitung 14 mit einem ersten Speiserückschlagventil 21, welches in Richtung auf die erste Arbeitsleitung 5 hin öffnet, und mit einem zweiten Speiserückschlagventil 22, welches in Richtung auf die zweite Arbeitsleitung 7 hin öffnet. Druckmittel aus der Umgehungsleitung 14 kann über das Differenzdruckregelventil 20 und das erste Speiserückschlagventil 21 und/oder das zweite Speiserückschlagventil 22 in die erste bzw. zweite Arbeitsleitung 5, 7 abgeführt werden. Die beiden Speiserückschlagventile können jeweils eine in der Fig. 1 nicht dargestellte Feder aufweisen. Das erste federbelastete Rückschlageventil 15 und die zweite federbelastete Rückschlageventil 16 weisen jeweils einen höheren Öffnungsdruck als das erste Speiserückschlagventil 21 und einen höheren Öffnungsdruck als das zweite Speiserückschlagventil 22 auf. Das erste federbelastete Rückschlageventil 15 und das zweite federbelastete Rückschlageventil 16 weisen denselben ersten Öffnungsdruck auf. Das erste und das zweite Speiserückschlagventil 21, 22 weisen denselben zweiten Öffnungsdruck auf. Der erste Öffnungsdruck - vorzugsweise ca. 14 bar - liegt höher als der zweite Öffnungsdruck - vorzugsweise ca. 5 bar.

Zwischen der Mindestdruckhaltevorrichtung 17 und der weiteren Speiseventileinheit 18 ist in der Umgehungsleitung 14 als Ventileinheit ein Schaltventil 23 angeordnet. Das Schaltventil 23 ist zudem zwischen der Mindestdruckhaltevorrichtung 17 und dem Arbeitsleitungsabschnitt 9 angeordnet. Das Schaltventil 23 ist in eine die Umgehungsleitung 14 sperrende und in eine die Umgehungsleitung 14 öffnende Position bringbar. Vorzugsweise wird die Position der Ventileinheit 23 elektrisch gesteuert. Das Schaltventil 23 ist in seiner geöffneten Position dargestellt, die die Neutralstellung bildet und bei unbestromtem Elektromagneten durch eine Feder eingenommen wird.

Mittels der Umgehungsleitung 14 kann bei dem erfindungsgemäßen Antrieb lediglich der zweite Hydromotor 8 umgangen werden. Dies gilt für beide Förderrichtungen der Hydropumpe 2 gleichermaßen. Der zweite Hydromotor 8 kann jedoch nur umgangen werden, wenn das Schaltventil 23 in seiner geöffneten Position ist. Bei geschlossener Position de Schaltventils 23 kann der zweite Hydromotor 8 nicht umgangen werden und der Antrieb ist gesperrt. Dies gilt ebenfalls für beide Förderrichtungen der Hydropumpe 2.

In der ersten Förderrichtung der Hydropumpe 2 fördert die Hydropumpe 2 Druckmittel in die erste Arbeitsleitung 5. Das Druckmittel bedrückt den ersten Hydromotor 6 und fließt vollständig durch diesen hindurch in den Arbeitsleitungsabschnitt 9 ab. Bei geschlossenem Schaltventil 23 fließt das Druckmittel zudem vollständig von dem Arbeitsleitungsabschnitt 9 über den zweiten Hydromotor 8 in die zweite Arbeitsleitung 7 ab. Bei offenem Schaltventil 23 und damit entsperrtem Antrieb hingegen kann das Druckmittel auch nur teilweise von dem Arbeitsleitungsabschnitt 9 über den zweiten Hydromotor 8 in die zweite Arbeitsleitung 7 abfließen. Das Druckmittel kann auch über die Umgehungsleitung 14 abfließen, wenn der Druckabfall über den zweiten Hydromotor 8 größer würde als der Öffnungsdruck des ersten federbelasteten Rückschlagventils 15. Damit wird das erzeugte Abtriebsmoment des zweiten Hydromotors 8 begrenzt.

In einer der ersten Förderrichtung der Hydropumpe 2 entgegengesetzten zweiten Förderrichtung der Hydropumpe 2 fördert die Hydropumpe 2 Druckmittel in die zweite Arbeitsleitung 7. Bei geschlossenem Schaltventil 23 bedrückt das Druckmittel den zweiten Hydromotor 8 und fließt vollständig durch diesen in den Arbeitsleitungsabschnitt 9 ab. Das Druckmittel fließt weiterhin von dem Arbeitsleitungsabschnitt 9 über den ersten Hydromotor 6 in die erste Arbeitsleitung 6 ab. Bei offenem Schaltventil 23 hingegen kann das Druckmittel auch nur teilweise von der zweiten Arbeitsleitung 7 über den zweiten Hydromotor 8 in den Arbeitsleitungsabschnitt 9 strömen. Übersteigt der Druckabfall an dem zweiten Hydromotor 8 den Öffnungsdruck des zweiten federbelasteten Rückschlagventils 16, so öffnet dieses und führt einen Teil des Volumenstroms an dem zweiten Hydromotor 8 vorbei direkt dem ersten Hydromotor 6 zu.

Es wird somit förderrichtungsunabhängig eine Begrenzung des Druckabfalls an dem zweiten Hydromotor 8 auf einen durch die jeweilige Federvorspannung der Rückschlagventile 15, 16 vorgegebenen Wert erreicht.

Bei zu hohen Drücken in dem Arbeitsleitungsabschnitt 9 fließt Druckmittel in dem Arbeitsleitungsabschnitt 9 über die dann öffnende Speiseventileinheit 18 in den Tank und/oder in eine der beiden Arbeitsleitungen 5, 7 ab.

Der in Bezug auf die erste Förderrichtung der Hydropumpe 2 stromaufwärtige erste Hydromotor 6 des ersten Hydromotorpaars, der in Bezug auf die zweite Förderrichtung der Hydropumpe 2 der stromabwärtige Hydromotor des ersten Hydromotorpaars ist, hat somit eine Priorität, da er in keiner Betriebssituation umgangen wird und so immer den größeren Teil zum Antriebsmoment beitragen kann. Der in Bezug auf die erste Förderrichtung der Hydropumpe 2 stromabwärtige, zweite Hydromotor 8 des ersten Hydromotorpaars, der in Bezug auf die zweite Förderrichtung der Hydropumpe 2 der stromaufwärtige Hydromotor des ersten Hydromotorpaars ist, hingegen hat niemals Priorität.

Der erste Hydromotor 6 mit der Priorität ist vorzugsweise mit einem vorderen Antriebstrang mechanisch verbunden, während der zweite Hydromotor 8 ohne Priorität vorzugsweise mit einem hinteren Antriebstrang mechanisch verbunden ist.

Die Ausführungsbeispiele zeigen jeweils nur ein Hydromotorpaar explizit. Wie in der Fig. 1 angedeutet, könnte jedoch wenigstens ein weiteres Hydromotorpaar vorgesehen sein. Die in Bezug auf das detailliert dargestellte Hydromotorpaar erläuterten Komponenten und Funktionen sind dann an jedem weiteren Paar entsprechend vorgesehen.

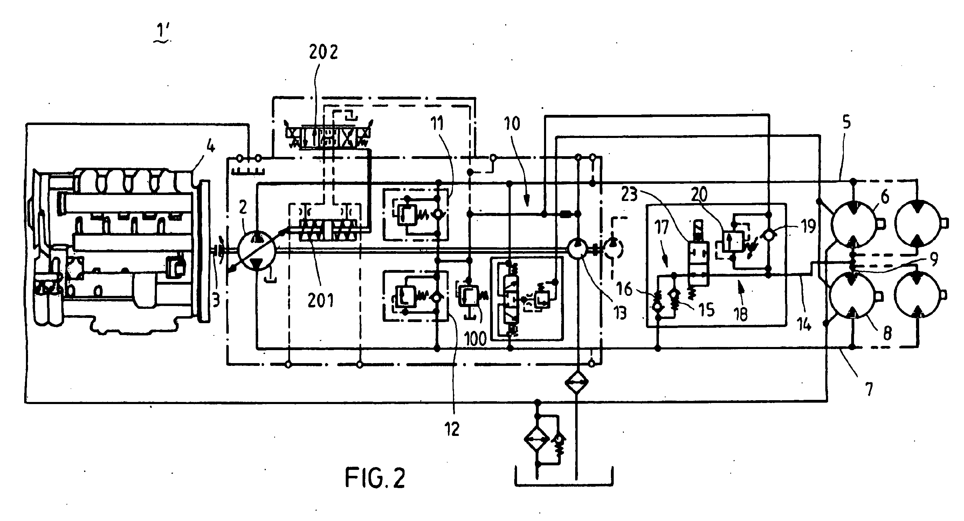

Denkbar ist allerdings auch, dass sich mehrere Hydromotorpaare eine Umgehungsleitung teilen, wie es in nachfolgend erläuterter Fig. 2 angedeutet ist.

Fig. 2 zeigt ein aus dem bisher erläuterten Ausführungsbeispiel abgeleitetes alternatives Ausführungsbeispiel 1' der Erfindung. In dem alternativen hydrostatischen Mehrmotorenantrieb 1' ist das Differenzdruckregelventil 20 der Speiseventileinheit 18 jedoch direkt mit der Speiseeinrichtung 10 rückverbunden, anstatt über das dritte Speiserückschlagventil 21 und/oder das vierte Speiserückschlagventil 22 mit der ersten Arbeitsleitung 5 bzw. der zweiten Arbeitsleitung 7 verbunden zu sein.

Die Erfindung ist nicht auf die dargestellten Ausführungsbeispiele beschränkt. Vielmehr sind auch einzelne Merkmale der Ausführungsbeispiele vorteilhaft miteinander kombinierbar.

Die dargestellten hydrostatischen Mehrmotorenantriebe 1, 1' mit der verstellbaren Hydropumpe 2 und dem ersten Hydromotorpaar mit dem ersten Hydromotor 6 und dem zweiten Hydromotor 8 sind jeweils erweiterbar. Z.B. können an die erste Arbeitsleitung 5 und an die zweite Arbeitsleitung 7 weitere Hydromotorpaare parallel zu dem ersten Hydromotorpaar angeschlossen werden. Die weiteren Hydromotorpaare können z.B. jeweils einen eigenen Arbeitsleitungsabschnitt 9, eine eigene Umgehungsleitung 14, eine eigene erste Mindestdruckhalteeinrichtung 15, eine eigene zweite Mindestdruckhalteeinrichtung 16, eine eigene Mindestdruckhaltevorrichtung 17, eine eigene Ventileinheit 23 und eine eigene Speiseventileinheit 18 umfassen, welche in der beschriebenen Art und Weise ihre jeweiligen Funktionen erfüllen. Dadurch kann jedes Hydromotorpaar individuell angesteuert werden und ganz individuell auf individuelle Belastungen im Betrieb reagieren.

## Patentansprüche

1. Hydrostatischer Mehrmotorenantrieb (1, 1') mit einer Hydropumpe (2) und zumindest einem ersten Hydromotorpaar (6, 8), wobei die beiden Hydromotoren (6, 8) des ersten Hydromotorpaars (6, 8) über einen Arbeitsleitungsabschnitt (9) seriell miteinander verbunden sind und eine erste Umgehungsleitung (14) vorgesehen ist, die einen in Bezug auf eine erste Förderrichtung der Hydropumpe (2) stromaufwärtigen Anschluss (9) des stromabwärtigen Hydromotors (8) mit einem stromabwärtigen Anschluss (7) des stromabwärtigen Hydromotors (8) verbindet,
wobei in der Umgehungsleitung (14) ein erstes federbelastetes Rückschlagventil (15) zum Aufrechterhalten eines Mindestdrucks an dem in Bezug auf die erste Förderrichtung der Hydropumpe (2) stromaufwärtigen Anschluss (9) des stromabwärtigen Hydromotors (8) und ein elektrisch gesteuertes Schaltventil (23), welches in eine die Umgehungsleitung (14) sperrende und in eine die Umgehungsleitung (14) öffnende Position bringbar ist, angeordnet sind,
**dadurch gekennzeichnet,**
**dass** in der Umgehungsleitung (14) parallel, aber mit entgegengesetzter Öffnungsrichtung zum ersten federbelasteten Rückschlagventil (15) ein zweites federbelastetes Rückschlagventil (16) angeordnet ist.

2. Hydrostatischer Mehrmotorenantrieb nach Anspruch 1,
**dadurch gekennzeichnet,**
**dass** das Schaltventil (23) zwischen dem ersten Arbeitsleitungsabschnitt (9) und den federbelasteten Rückschlagventilen (15, 16) angeordnet ist.

3. Hydrostatischer Mehrmotorenantrieb nach Anspruch 1 oder 2,
**dadurch gekennzeichnet,**
**dass** die Umgehungsleitung (14) zwischen dem Schaltventil (23) und dem ersten Arbeitsleitungsabschnitt (9) mit einer Speiseventileinheit (18) verbunden ist.

4. Hydrostatischer Mehrmotorenantrieb nach Anspruch 3,
**dadurch gekennzeichnet,**
**dass** die Speiseventileinheit (18) ein weiteres Rückschlagventil (19) und ein Differenzdruckregelventil (20) umfasst.

5. Hydrostatischer Mehrmotorenantrieb nach Anspruch 4,
**dadurch gekennzeichnet,**
**dass** die Speiseventileinheit (18) mittels des weiteren Rückschlagventils (19) mit einer Speiseeinrichtung (10) verbunden ist.

6. Hydrostatischer Mehrmotorenantrieb nach Anspruch 4 oder 5,
**dadurch gekennzeichnet,**
**dass** die Speiseventileinheit (18) mittels des Differenzdruckregelventils (20) über ein erstes Speiserückschlagventil (21) mit einer ersten Arbeitsleitung (5) und über ein zweites Speiserückschlagventil (22) mit einer zweiten Arbeitsleitung (7) verbunden ist.

7. Hydrostatischer Mehrmotorenantrieb nach Anspruch 6,
**dadurch gekennzeichnet,**
**dass** das erste federbelastete Rückschlagventil (15) und das zweite federbelastete Rückschlagventil (16) jeweils einen höheren Öffnungsdruck als das erste Speiserückschlagventil (21) und einen höheren Öffnungsdruck als das zweite Speiserückschlagventil (22) aufweisen.

8. Hydrostatischer Mehrmotorenantrieb nach einem der Ansprüche 1 bis 7,
**dadurch gekennzeichnet,**
**dass** das erste federbelastete Rückschlagventil (15) und das zweite federbelastete Rückschlagventil (16) denselben ersten Öffnungsdruck aufweisen.

9. Hydrostatischer Mehrmotorenantrieb nach einem der Ansprüche 6 bis 8,
**dadurch gekennzeichnet,**
**dass** das erste Speiserückschlagventil (21) und das zweite Speiserückschlagventil (22) denselben zweiten Öffnungsdruck aufweisen.

10. Hydrostatischer Mehrmotorenantrieb nach einem der Ansprüche 1 bis 9,
**dadurch gekennzeichnet,**
**dass** der jeweils in Bezug auf die erste Förderrichtung stromaufwärtige Hydromotor bei mehreren Hydromotorpaaren derselben Fahrzeugachse zugeordnet sind.

## Claims

1. Hydrostatic multi-motor drive (1, 1'), having a hydraulic pump (2) and having at least one first hydraulic motor pair (6, 8), wherein the two hydraulic motors (6, 8) of the first hydraulic motor pair (6, 8) are connected to one another in series by way of a working line section (9), and a first bypass line (14) is provided which, with respect to a first delivery direction of the hydraulic pump (2), connects an upstream port (9) of the downstream hydraulic motor (8) to a downstream port (7) of the downstream hydraulic motor (8), wherein, in the bypass line (14), there are provided a first spring-loaded check valve (15), which serves for maintaining a minimum pressure at the upstream port (9) of the downstream hydraulic motor (8) with respect to the first delivery direction of the hydraulic pump (2), and an electrically controlled switching valve (23), which can be placed into a position in which it shuts off the bypass line (14) and into a position in which it opens up the bypass line (14),
**characterized**
**in that** a second spring-loaded check valve (16) is arranged in the bypass line (14) in parallel with, but so as to have an opposite opening direction in relation to, the first spring-loaded check valve (15).

2. Hydrostatic multi-motor drive according to Claim 1,
**characterized**
**in that** the switching valve (23) is arranged between the first working line section (9) and the spring-loaded check valves (15, 16).

3. Hydrostatic multi-motor drive according to Claim 1 or 2,
**characterized**
**in that** the bypass line (14) is connected, between the switching valve (23) and the first working line section (9), to a feed valve unit (18).

4. Hydrostatic multi-motor drive according to Claim 3,
**characterized**
**in that** the feed valve unit (18) comprises a further check valve (19) and a differential pressure regulating valve (20).

5. Hydrostatic multi-motor drive according to Claim 4,
**characterized**
**in that** the feed valve unit (18) is connected by way of the further check valve (19) to a feed device (10).

6. Hydrostatic multi-motor drive according to Claim 4 or 5,
**characterized**
**in that** the feed valve unit (18) is, by way of the differential pressure regulating valve (20), connected via a first feed check valve (21) to a first working line (5) and via a second feed check valve (22) to a second working line (7).

7. Hydrostatic multi-motor drive according to Claim 6,
**characterized**
**in that** the first spring-loaded check valve (15) and the second spring-loaded check valve (16) each have a higher opening pressure than the first feed check valve (21) and a higher opening pressure than the second feed check valve (22).

8. Hydrostatic multi-motor drive according to one of Claims 1 to 7,
**characterized**
**in that** the first spring-loaded check valve (15) and the second spring-loaded check valve (16) have the same, first opening pressure.

9. Hydrostatic multi-motor drive according to one of Claims 6 to 8,
**characterized**
**in that** the first feed check valve (21) and the second feed check valve (22) have the same, second opening pressure.

10. Hydrostatic multi-motor drive according to one of Claims 1 to 9,
**characterized**
**in that**, in the case of multiple hydraulic motor pairs, the in each case upstream hydraulic motors with respect to the first delivery direction are assigned to the same vehicle axle.

## Revendications

1. Entraînement hydrostatique de plusieurs moteurs (1, 1'), avec une pompe hydraulique (2) et au moins une première paire de moteurs hydrauliques (6, 8), dans lequel les deux moteurs hydrauliques (6, 8) de la première paire de moteurs hydrauliques (6, 8) sont reliés l'un à l'autre en série par une section de conduite de travail (9) et il est prévu une première conduite de contournement (14), qui relie un raccord amont (9) du moteur hydraulique aval (8) par rapport à une première direction de refoulement de la pompe hydraulique (2) à un raccord aval (7) du moteur hydraulique aval (8), dans lequel un premier clapet antiretour à ressort (15) destiné à maintenir une pression minimale au raccord amont (9) du moteur hydraulique aval (8) par rapport à la première direction de refoulement de la pompe hydraulique (2) et une soupape de commande (23) à commande électrique, qui peut être amenée dans une position fermant la conduite de contournement (14) et dans une position ouvrant la conduite de contournement (14), sont disposés dans la conduite de contournement (14), **caractérisé en ce qu'**un deuxième clapet antiretour à ressort (16) est disposé dans la conduite de contournement (14), parallèlement au premier clapet antiretour à ressort (15) mais avec une direction d'ouverture opposée.

2. Entraînement hydrostatique de plusieurs moteurs selon la revendication 1, **caractérisé en ce que** la soupape de commande (23) est disposée entre la première section de conduite de travail (9) et les clapets antiretour à ressort (15, 16).

3. Entraînement hydrostatique de plusieurs moteurs selon la revendication 1 ou 2, **caractérisé en ce que** la conduite de contournement (14) est reliée à une unité de soupape d'alimentation (18) entre la soupape de commande (23) et la première section de conduite de travail (9).

4. Entraînement hydrostatique de plusieurs moteurs selon la revendication 3, **caractérisé en ce que** l'unité de soupape d'alimentation (18) comprend un autre clapet antiretour (19) et une soupape de réglage de différence de pression (20).

5. Entraînement hydrostatique de plusieurs moteurs selon la revendication 4, **caractérisé en ce que** l'unité de soupape d'alimentation (18) est reliée à un dispositif d'alimentation (10) au moyen de l'autre clapet antiretour (19).

6. Entraînement hydrostatique de plusieurs moteurs selon la revendication 4 ou 5, **caractérisé en ce que** l'unité de soupape d'alimentation (18) est reliée à une première conduite de travail (5) au moyen de la soupape de réglage de différence de pression (20) via un premier clapet antiretour d'alimentation (21) et à une deuxième conduite de travail (7) via un deuxième clapet antiretour d'alimentation (22).

7. Entraînement hydrostatique de plusieurs moteurs selon la revendication 6, **caractérisé en ce que** le premier clapet antiretour à ressort (15) et le deuxième clapet antiretour à ressort (16) présentent respectivement une pression d'ouverture plus élevée que le premier clapet antiretour d'alimentation (21) et une pression d'ouverture plus élevée que le deuxième clapet antiretour d'alimentation (22).

8. Entraînement hydrostatique de plusieurs moteurs selon l'une quelconque des revendications 1 à 7, **caractérisé en ce que** le premier clapet antiretour à ressort (15) et le deuxième clapet antiretour à ressort (16) présentent la même première pression d'ouverture.

9. Entraînement hydrostatique de plusieurs moteurs selon l'une quelconque des revendications 6 à 8, **caractérisé en ce que** le premier clapet antiretour d'alimentation (21) et le deuxième clapet antiretour d'alimentation (22) présentent la même deuxième pression d'ouverture.

10. Entraînement hydrostatique de plusieurs moteurs selon l'une quelconque des revendications 1 à 9, **caractérisé en ce que** le moteur hydraulique disposé respectivement en amont par rapport à la première direction de refoulement dans le cas de plusieurs paires de moteurs hydrauliques est associé au même essieu de véhicule.
